# EUROPÄISCHE PATENTANMELDUNG

(11) **EP 2 371 753 A1**
(43) Veröffentlichungstag der Anmeldung: **05.10.2011**
(21) Anmeldenummer: 10158182.5
(22) Anmeldetag: 29.03.2010
(51) Int. Cl.: B66B 7/08, F16G 11/04

(54) **Seilklemme**

(71) Anmelder: Inventio AG, 6052 Hergiswil NW (CH)
(72) Erfinder: Hüsler, Beat, 6006 Luzern (CH); Tremp, Philipp, 6033 Buchrain (CH)
(74) Vertreter: Blöchle, Hans

(57) **Zusammenfassung**

Die Erfindung betrifft eine Seilklemme (100) für ein Trag- und Treib- bzw. Ausgleichsmittel (3) mit einer axialen Längsachse (13), mit mindestens einer Klemmbacken-Anordnung (14a, 14b) gebildet aus mindestens einer ersten Klemmbacke (4a, 4c) und mindestens einer zweiten Klemmbacke (4b, 4d), wobei eine Klemmkraft (F_{Cl}) zumindest einer Klemmbacke (4a-4d) durch eine Federkraft (F_{F}) mindestens einer Feder (5a, 5b) unterstützt ist, deren Kraftrichtung (17a, 17b) parallel zu der axialen Längsachse (13) ist.

## Beschreibung

Die vorliegende Erfindung betrifft eine Seilklemme bzw. Tragmittelklemme, wie sie beispielsweise bei dem Befestigen, bei dem Spannen oder auch bei dem Transport von Drahtseilen oder ähnlichen Trag- und Treib- bzw. Ausgleichsmitteln Verwendung findet.

Typische Anwendungsgebiete sind der Seilbahnbau, aber auch der Bau von Aufzugsanlagen nach dem sogenannten Jump-Verfahren, bei dem die Aufzugsanlage - sei es als Bauaufzug oder als endgültige Anlage - mit der Errichtung der Stockwerke mitwächst. Hierbei ist es erforderlich, das Trag- und Treib- bzw. Ausgleichsmittel oder auch andere Seile zu verlängern, d.h., greifen und ziehen zu können, ohne das Trag- und Treib- bzw. Ausgleichsmittel oder eine es umhüllende Ummantelung zu beschädigen.

Die internationale Veröffentlichungsschrift WO-A1-00/60253 offenbart eine Vorrichtung zum Befestigen, Spannen oder Ziehen eines dehnbaren Zugelementes, die das dehnbare Zugelement dadurch nicht zu beschädigen versucht, indem zwei gegenüberliegende und hydraulisch betätigte Keile einer stationären Reck-Anlage ihre Klemmkraft auf eine Reihe von Klemmschuhen aufteilen, die sich mechanisch gesteuert linear zunehmend bewegen, der Dehnung des Zugelementes entsprechend. Auf diese Art können Zugelemente vorgereckt werden und dadurch wiederum wird vermieden, dass wegen einer nach der Montage auftretende Zugelements-Dehnung ein Nachspannen des Zugelementes erforderlich ist.

Auf Basis dieser stationären Reck-Anlage ist auch eine mobile Seilklemme entwickelt worden, bei der die Dehnungskompensation hydraulisch erfolgt. Hydraulische Ausgleichszylinder erlauben mittels beweglicher Backen die Übertragung einer in jeder Backe identischen Kraft auf das Seil, indem sich die beweglichen Backen der Seildehnung entsprechend verschieben.

Die Aufgabe der vorliegenden Erfindung ist es, eine Seilklemme bzw. eine Klemme für ein Trag- und Treibmittel oder generell für ein Ausgleichsmittel vorzuschlagen, die gleichsam schonend greift, jedoch aus wenigen Teilen besteht und somit kostengünstig ist.

Die Lösung der Aufgabe besteht zunächst in der Anordnung mindestens eines simultan verschiebbar angeordneten Klemmbacken-Paares, das in einen geöffneten und in einen geschlossenen Zustand überführbar ist. In dem geöffneten Zustand ist eine das Klemmbacken-Paar an das Seil bzw. an das Trag- und Treib- bzw. Ausgleichsmittel anlegende Feder zusammengedrückt, sodass die Klemmbacken keinen Kontakt zu dem Seil bzw. zu dem Trag- und Treib- bzw. Ausgleichsmittel haben. Die Feder ist vorzugsweise axial angeordnet, d.h. ihre Längsachse bzw. Kraftachse verläuft parallel zu der Längsachse des Trag- und Treib- bzw. Ausgleichsmittels. In dem geschlossenen Zustand legt die Feder die Klemmbacken an das Seil bzw. an das Trag- und Treib- bzw. Ausgleichsmittel an, sodass die sich aufbauende Reibung die keilförmigen Klemmbacken selbstverstärkend mittels einer Servowirkung schliesst.

Eine erfindungsgemässe Seilklemme bedient sich somit eines kombinierten Keil-Feder-Prinzips insofern, als dass die Feder - im Unterschied zu einer rein auf der Federkraft basierenden Klemme - die selbsttätige Schliessung einer rein auf der Keilwirkung basierenden Klemme dahingehend unterstützt, dass die Keile unverzüglich und optimal an das Seil bzw. an das Trag- und Treib- bzw. Ausgleichsmittel angelegt werden.

Eine erfindungsgemässe Seilklemme ist jedoch nicht nur für das sichere Greifen des Trag- und Treib- bzw. Ausgleichsmittels im Verlängerungsfall ausgelegt, sondern auch für das sichere Halten des Trag- und Treib- bzw. Ausgleichsmittels während des Aufzugsbetriebs. Die Klemmbacken sind hierbei so ausgelegt, dass keine seilschädigende Biegung des Trag- und Treib- bzw. Ausgleichsmittels wie bei einem Keilschloss auftritt.

Eine bevorzugte Ausgestaltungsvariante einer erfindungsgemässen Seilklemme weist mindestens ein Gehäuse oder mindestens eine Zackenleiste mit zwei oder mehreren gegenüberliegenden schräg angeordneten Innenflächen auf. An diesen schräg angeordneten Innenflächen gleiten die Klemmbacken eines Klemmbacken-Paares oder auch dreidimensionale, im Querschnitt konzentrische Anordnungen von Klemmbacken-Drillingen oder -Vierlingen in vorzugsweise mit einem Gleitlack beschichteten Gleitlagern oder in Rollenkäfigen und umschliessen das Trag- und Treib- bzw. Ausgleichsmittel durch die sich selbstverstärkende Schliesswirkung der keilförmigen Anordnung, aber auch durch die unterstützende Federkraft. Die Reibwerte der Keilmechanik sind auf den Keilwinkel abgestimmt und liegen vorzugsweise in einem Bereich von 0.10 bis 0.20, betragen jedoch vorzugsweise 0.15.

Eine erste Klemmbacke ist als keilförmiger Körper mit einer in einem bestimmten Keilwinkel schräg angeordneten Fläche innerhalb einer entsprechend keilförmigen Ausnehmung des Gehäuses oder der Zackenleiste angeordnet. Eine zweite Klemmbacke, die zusammen mit der ersten Klemmbacke das Klemmbacken-Paar bildet, ist in einer zweiten Ausnehmung des Gehäuses oder der Zackenleiste angeordnet, die in einem identischen, aber komplementär angeordneten Keilwinkel eine weitere schräg angeordnete Innenfläche ausbildet. Der Keilwinkel liegt vorzugsweise in einem Bereich von 1 bis 8 Grad, beträgt jedoch vorzugsweise 2.5 Grad.

Die unterstützende Federkraft ist vorzugsweise von einer einzelnen, in einer Federführung mit einem Federteller angeordneten Feder auf die Klemmbacken beaufschlagt. Als Feder kommen insbesondere Schraubenfedern, Tellerfedern oder auch Gasdruckfedern in Betracht. Insbesondere Gasdruckfedern bieten bei kurzen Einbaulängen hohe Federkräfte und sind somit gut zur Verwendung in einer erfindungsgemässen Seilklemme geeignet. Die Klemmbacken werden gemeinsam und simultan an das Trag- und Treib- bzw. Ausgleichsmittel angedrückt. Eine optionale Ausgestaltungsvariante einer erfindungsgemässen Seilklemme sieht für jede Klemmbacke eine einzelne Feder mit einer separaten Führung vor.

Nicht nur die letztere Ausgestaltungsvariante mit je einer Feder pro Klemmbacke, sondern auch die Ausgestaltungsvariante mit einer gemeinsamen Feder für beide Klemmbacken eines Klemmbacken-Paares oder für alle Klemmbacken eines Klemmbacken-Drillings oder -Vierlings kann des Weiteren als Option eine vorzugsweise mechanische Kopplung zwischen den einzelnen Klemmbacken vorsehen. Diese Kopplung gewährleistet zusätzlich, dass die Klemmbacken sich simultan bewegen. Auf diese Weise wird zusätzlich vermieden, dass aufgrund eines früheren bzw. stärkeren Kontakts einer Klemmbacke mit dem Trag- und Treib- bzw. Ausgleichsmittel diese Klemmbacke durch die sich früher aufbauende Reibung zeitlich früher als ihre gegenüberliegende Klemmbacke eingezogen wird und somit ein Versatz zwischen den Klemmbacken entsteht, der das Trag- und Treib- bzw. Ausgleichsmittel bzw. dessen Umhüllung stärker beansprucht.

Die Anpressflächen der Klemmbacken können plan ausgestaltet sein, oder aber auch im Querschnitt konkav, sodass sie den Umfang eines runden Trag- und Treib- bzw. Ausgleichsmittels formschlüssig umschliessen. Die Kanten der Anpressflächen sind vorzugsweise entsprechend gefast. Darüber hinaus kann die axiale Längsausdehnung der Anpressfläche einer Klemmbacke konvex ausgeformt sein, sodass sich in der Mitte der Anpressfläche ein höherer Anpressdruck als an den Rändern ergibt.

Eine weitere Option hinsichtlich der Anpressflächen der Klemmbacken besteht in der Ausformung von korrespondierenden, schlangenlinienförmigen Krümmungen mit Krümmungsradien, die zwar keine unerwünschte Biegebeanspruchung des Trag- und Treib- bzw. Ausgleichsmittels erzeugen, aber eine Vergrösserung und Verbesserung der Kontaktfläche.

Alle beschriebenen Ausgestaltungen von Anpressflächen weisen vorzugsweise definierte Reibwerte auf, indem die Kontaktflächen beispielsweise aufgeraut sind oder aus bestimmten Materialien wie beispielsweise Kunststoff, Stahl oder Aluminium bestehen. Die Kontaktflächen können optional auch eine Widerhaken-Struktur aufweisen.

Des Weiteren können die Klemmbacken als weitere Option als verformbare Keile ausgestaltet sein, die durch den Kontakt mit dem Trag- und Treib- bzw. Ausgleichsmittel in eine wiederum keilförmige Kavität des Seilklemmen-Gehäuses hineingezogen werden. Als verformbare Keile kommen insbesondere Kissen aus entsprechend widerstandsfähigem Material in Betracht, die eine Flüssigkeit beinhalten.

Eine erfindungsgemässe Seilklemme bietet gegenüber einer nur federbasierten Seilklemme den Vorteil, dass die Feder oder die Federn nicht so stark und voluminös sein müssen, um die Schliesskraft der Seilklemme zu erzeugen. Grundsätzlich muss die Federkraft einer erfindungsgemäss kombiniert keil- und federbasierten Seilklemme nur so hoch sein, um ein Anlegen der Klemmbacken an das Trag- und Treib- bzw. Ausgleichsmittel zu gewährleisten und so die selbsttätige Verkeilung der Klemmbacken nahtlos wirken zu lassen. Vorzugsweise jedoch liegt die Federkraft höher, selbst höher als eine allfällige Selbsthemmungskraft der Klemmbacken (welche die Klemmbacken bei Wegfall der Zugbeanspruchung noch geschlossen halten würde), sodass die Feder die Klemmkraft der Klemmbacken unterstützt, und sodass sich aus sicherheitstechnischen Gründen auch bei einer "Umkehr" der Last die Klemmbacken nicht lösen.

Eine erfindungsgemässe Seilklemme umfasst in einer beispielhaften Ausführungsform eine Öffnungsvorrichtung für das Öffnen der Klemmbacken. Diese Öffnungsvorrichtung besteht vorzugsweise aus einer Hebel-Schiebemechanik, mittels derer manuell oder hydraulisch zwischen einer - vorzugsweise einrastbaren bzw. verriegelbaren - geöffneten Position für die Klemmbacken ohne Kontakt zu dem Trag- und Treib- bzw. Ausgleichsmittel und einer geschlossenen Position geschaltet werden kann, in der die Federkraft den Kontakt der Klemmbacken zu dem Trag- und Treib- bzw. Ausgleichsmittel herstellt. Im Vergleich zu einer reinen federbasierten Seilklemme bleibt die notwendige Öffnungsenergie vorteilhafterweise deutlich geringer, weil sie lediglich eine allfällige Selbsthemmungskraft der Klemmbacken und die Rückstellung der Feder überwinden muss, die nur für das Anlegen der Klemmbacken und nicht für die Erzeugung der Haltekraft selbst ausgelegt ist.

Eine weiterhin bevorzugte Ausgestaltungsvariante einer erfindungsgemässen Seilklemme umfasst nicht nur ein einzelnes Klemmbacken-Paar, sondern zwei oder mehrere Klemmbacken-Paare, die vorzugsweise unabhängig voneinander schliessen. Bei einem einzelnen Klemmbacken-Paar kann nachteilig sein, das zur Vermeidung des Überschreitens der zulässigen Flächenpressung axial relativ lange Klemmflächen erforderlich sind. Insbesondere bei solchen langen Klemmflächen jedoch kann sich eine nach dem Anlegen der Klemmbacken eintretende Dehnung des Trag- und Treib- bzw. Ausgleichsmittels in unerwünschtem Mikrogleiten des Trag- und Treib- bzw. Ausgleichsmittels innerhalb der eingeklemmten Fläche äussern. Um dieses zu vermeiden, kann die Flächenpressung auf zwei oder mehrere Klemmbacken-Paare aufgeteilt werden, die sich unabhängig voneinander - aufgrund der Federunterstützung - schliessen und sich so quasi selbsttätig in axialer Richtung auf die Zugkraft im Trag- und Treib- bzw. Ausgleichsmittel "einstellen". Dieses kann bedeuten, dass sich das vordere Klemmbacken-Paar schliesst und eine durchmesservermindernde Dehnung des Trag- und Treib- bzw. Ausgleichsmittels eintritt und sich somit das nächste Klemmbacken-Paar minimal verzögert und unter Zurücklegung eines minimal grösseren Weges im Sinne eines grösseren radialen Schliesshubes schliesst.

Im Rahmen der Offenbarung der vorliegenden Anmeldung liegt jedoch nicht nur eine Seilklemme mit zwei oder mehreren Klemmbacken-Paaren, die unabhängig voneinander schliessen, sondern auch eine das Schliessen der Klemmbacken-Paare verzögernde Kopplung. Hierfür weist die Öffnungsvorrichtung beispielsweise eine Exzenter-Steuerung oder eine elektrischelektronische Steuerung auf, sodass sich das erste Klemmbacken-Paar schliessen kann, das Trag- und Treib- bzw. Ausgleichsmittel sich dehnen kann und erst dann die Schliessung des zweiten Klemmbacken-Paares freigegeben wird. Die einstellbare Verzögerung entspricht dem jeweiligen Dehnungskoeffizienten des Trag- und Treib- bzw. Ausgleichsmittels.

Durch zwei oder mehr Klemmbacken-Paare ergibt sich zusätzlich eine Redundanz mit höherer Ausfallsicherheit. Hierfür ist die Flächenpressung eines einzelnen Klemmbacken-Paares vorzugsweise so ausgelegt, dass es die erforderliche Haltekraft alleine aufbringen kann, ohne das Trag- und Treib- bzw. Ausgleichsmittel zu beschädigen. Weiterhin vorzugsweise ist der Schliessvorgang der Klemmbacken-Paare sensorüberwacht, beispielsweise mit einem Druck- oder/und einem Wegsensor, sodass die Fehlfunktion eines Klemmbacken-Paares anzeigbar ist. Eine weitere Überwachungsmöglichkeit des Schliessvorgangs bzw. eine Anzeige, ob die Klemmbacken geschlossen an dem Trag- und Treib- bzw. Ausgleichsmittel anliegen oder nicht, ergibt sich bei leitenden Trag- und Treib- bzw. Ausgleichsmitteln durch das Anlegen eines Stromes und die Erfassung der unterschiedlichen Widerstandswerte im Kontakt- und Nichtkontaktfall.

Die beschriebenen einzelnen Merkmale sind untereinander zu einer erfindungsgemässen Seilklemme kombinierbar, so sind beispielsweise die unterschiedlichen Ausgestaltungen von Federn mit den unterschiedlichen Ausgestaltungen des und/oder der Klemmbacken-Paare mit den unterschiedlichen Ausgestaltungen der Keilmechanik zu einer erfindungsgemässen Seilklemme verein- und kombinierbar.

Eine erfindungsgemässe Seilklemme bringt folgende Vorteile:
- Die Klemmkraft passt sich automatisch den jeweiligen Erfordernissen an. Die Klemmkraft muss nicht immer, ungeachtet der tatsächlichen Zugbeanspruchung, 80 % der Mindestbruchkraft des Trag- und Treib- bzw. Ausgleichsmittels betragen, was sich wiederum schonend für das Trag- und Treib- bzw. Ausgleichsmittel auswirkt. Die Seilklemme kann jedoch bei Bedarf 80 % der Mindestbruchkraft des Trag- und Treib- bzw. Ausgleichsmittels aufbringen.
- Die zulässige Flächenpressung am Trag- und Treib- bzw. Ausgleichsmittel kann somit im Betriebszustand (im Vergleich zu einer reinen Federkraftklemme oder zu einer Schraubenklemme) mit kürzeren Klemmbacken eingehalten werden.
- Bei einer Belastung mit 80 % der Mindestbruchkraft des Trag- und Treib- bzw. Ausgleichsmittels werden die Klemmkraft und damit die Flächenpressung am Seil viel grösser.
- Die Haltewirkung ist nur durch den Bruch bzw. das Reissen des Trag- und Treib- bzw. Ausgleichsmittels oder die Festigkeit des Seilklemmen-Gehäuses begrenzt.
- Die Federkraft erhöht im Vergleich zu einem reinen Keilsystem die Sicherheit gegen Durchrutschen vor allem bei kritisch kleiner Zugkraft in dem Trag- und Treib- bzw. Ausgleichsmittel. Bei Zugkräften nahe der Bruchlast hat die Federkraft nur noch geringfügigen Einfluss.
- Die Federkraft wirkt in der Zugrichtung des Trag- und Treib- bzw. Ausgleichsmittels und wird ebenfalls über das Keilsystem verstärkt (ein langer Federweg wird in einen kurzen Klemmweg umgewandelt).
- Kurze Montage- und Handhabungszeit, ohne dass Schraubverbindungen gelöst, ausgewechselt und mit einem vorgegebenen Drehmoment angezogen werden müssten.

Weitere oder vorteilhafte Ausgestaltungen einer erfindungsgemässen Seilklemme bzw. einer erfindungsgemässen Aufzugsanlage mit einer erfindungsgemässen Seilklemme bilden die Gegenstände der abhängigen Ansprüche.

Anhand von Figuren wird die Erfindung symbolisch und beispielhaft näher erläutert. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei
Fig. 1 eine schematische und perspektivische Darstellung einer Seilklemme;
Fig. 2 eine schematische Darstellung der Seilklemme aus der

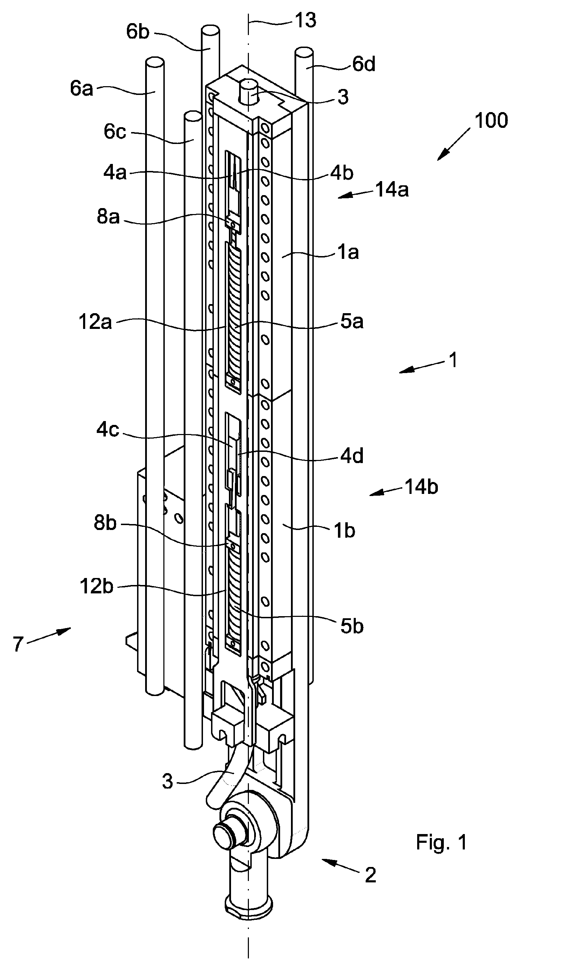

Fig. 1 in einer ersten Seitenansicht;

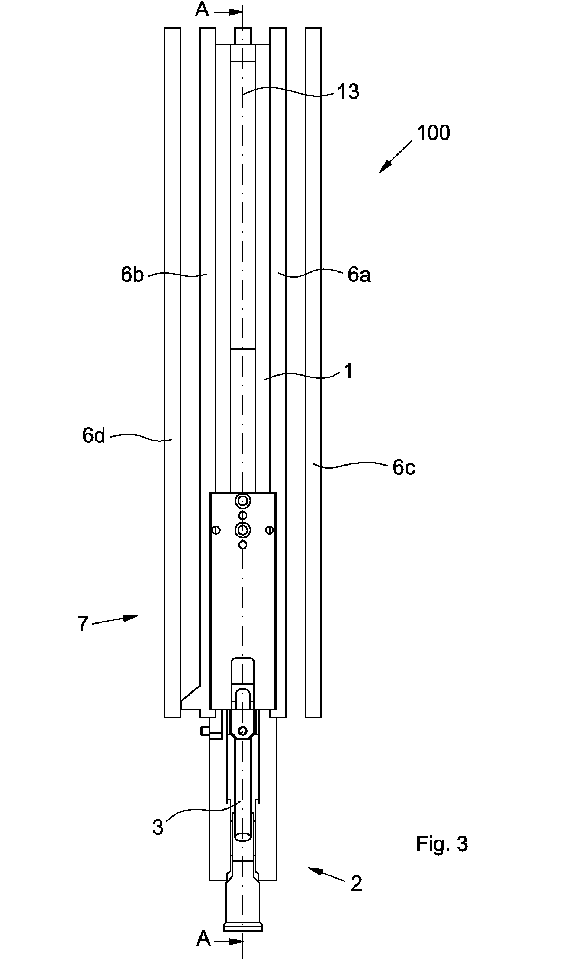

Fig. 3 eine schematische Darstellung der Seilklemme aus den

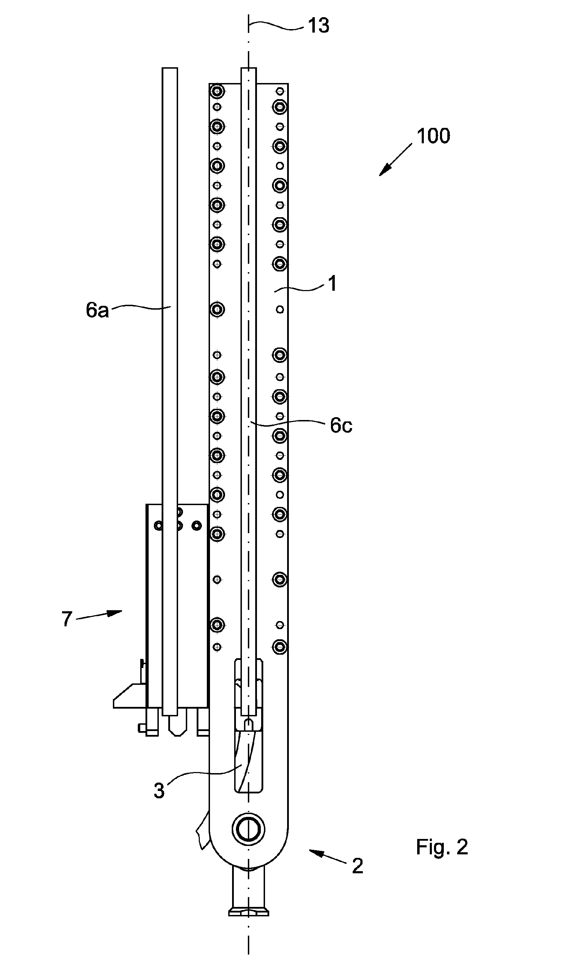

Figuren 1 und 2 in einer zweiten Seitenansicht;

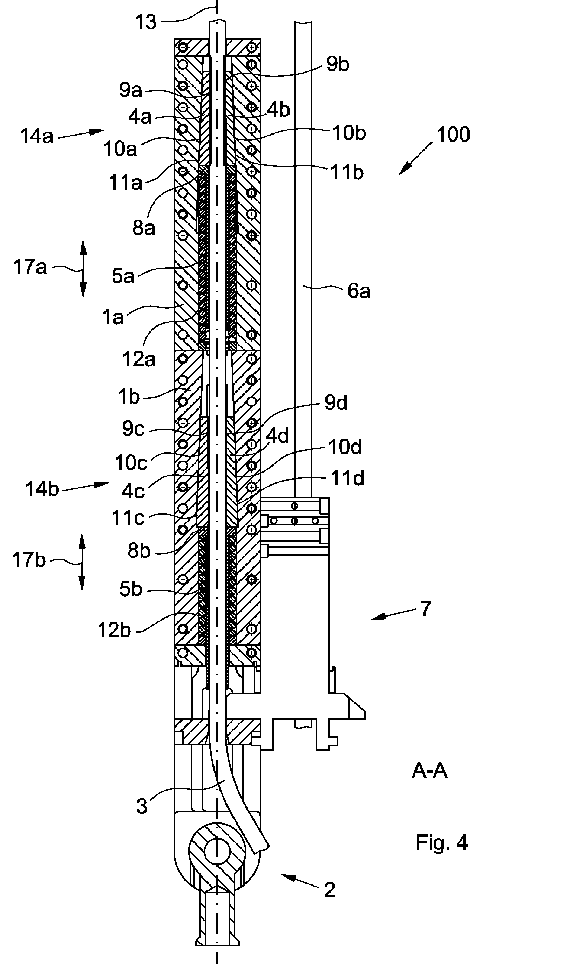

Fig. 4 eine schematische Darstellung der Seilklemme aus den bisherigen Figuren, geschnitten entlang der Schnittachse A-A aus der Fig. 3;

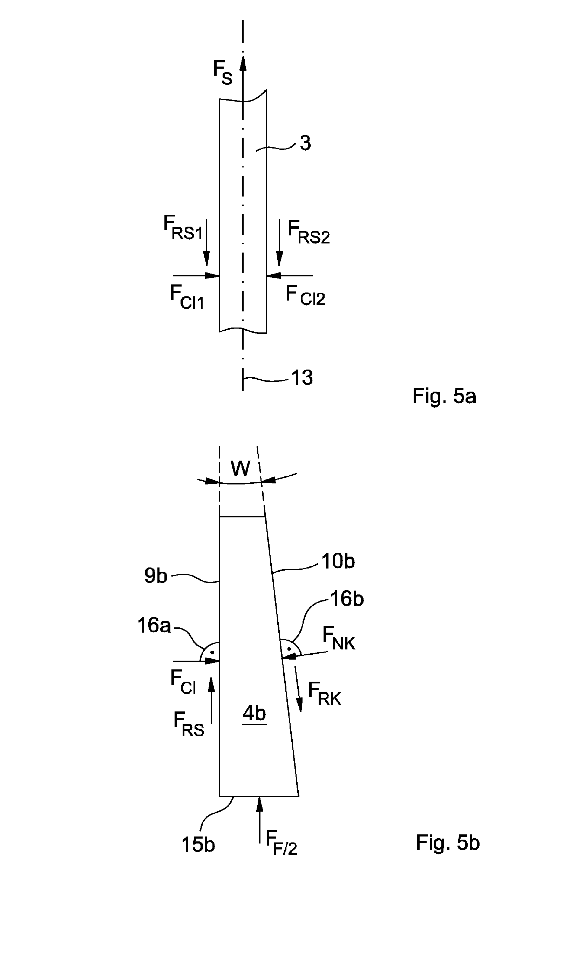

Fig. 5a eine schematische Darstellung der Kräfte, die auf das Trag- und Treib- bzw. Ausgleichsmittel wirken und
Fig. 5b eine schematische Darstellung der Kräfte, die auf eine Klemmbacke wirken.

Die Fig. 1 zeigt schematisch eine perspektivische Darstellung einer beispielhaften Ausführungsform einer erfindungsgemässen Seilklemme 100 mit abgenommenem Gehäusedeckel. Ein Gehäuse 1 besteht aus zwei seriell verschraubten Teilgehäusen 1a und 1b bzw. Zackenleisten. Diese Teilgehäuse 1a und 1b können auch als ein einziges, einstückiges Gehäuse ausgeformt sein. Das Gehäuse 1 endet in einer Kugelgelenks-Zugöse 2 und umschliesst ein Trag- und Treib- bzw. Ausgleichsmittel 3 mit Klemmbacken 4a-4d, wobei die Klemmbacken 4a und 4b ein erstes Klemmbacken-Paar 14a und die Klemmbacken 4c und 4d ein zweites Klemmbacken-Paar 14b bilden. Das Klemmbacken-Paar 14a ist in seiner geschlossenen Stellung dargestellt, d.h. mit an dem Trag- und Treib- bzw. Ausgleichsmittel 3 angelegten Klemmbacken 4a und 4b, während das Klemmbacken-Paar 14b mit geöffneten Klemmbacken 4c und 4d gezeigt ist. Demzufolge ist auch erkennbar, dass sich eine erste Feder 5a in einem Federgehäuse 12a in unbelastetem, nicht komprimiertem Zustand, und eine zweite, an und für sich identische Feder 5b in einem Federgehäuse 12b sich in belastetem, komprimiertem Zustand befindet. Beide Klemmbacken-Paare 14a und 14b werden vorzugsweise parallel mit einer vorzugsweise hydraulisch funktionierenden Öffnungsvorrichtung 7 geöffnet. Das mit der Seilklemme 100 geklemmte Trag- und Treib- bzw. Ausgleichsmittel 3 ist von weiteren, parallel verlaufenden Trag- und Treib- bzw. Ausgleichsmitteln 6a-6d umgeben, die unter Umständen nach erfolgter Verlängerung des Trag- und Treib- bzw. Ausgleichsmittels 3 ebenfalls verlängert werden. Die Federn 5a und 5b sind axial, d.h. parallel zu einer axialen Längsachse 13 der Seilklemme 100 bzw. zu der Längsachse des Trag- und Treib- bzw. Ausgleichsmittels 3 angeordnet und sind jeweils in einer Federtellern-Federführung 8a und 8b geführt, die die Klemmbacken 4a und 4b bzw. 4c und 4d an ihren jeweiligen Unterseiten beaufschlagen. Der radiale Schliesshub einer Klemmbacke 4a-4d beträgt vorzugsweise 1 mm, also jeweils 2 mm für das erste Klemmbacken-Paar 14a bzw. das zweite Klemmbacken-Paar 14b.

Die Fig. 2 zeigt schematisch die Frontansicht der Seilklemme 100 aus der Fig. 1. In dieser Ansicht ist erkennbar, dass einerseits das zu dem Trag- und Treib- bzw. Ausgleichsmittel 3 parallel verlaufende Trag- und Treib- bzw. Ausgleichsmittel 6b aus der Fig. 1 in einem identischen Abstand wie das parallel verlaufende Trag- und Treib- bzw. Ausgleichsmittel 6a zu der Zackenleiste 1 angeordnet ist und andererseits das parallel verlaufende Trag- und Treib- bzw. Ausgleichsmittel 6c, das Trag- und Treib- bzw. Ausgleichsmittel 3 selbst und das hierzu parallel verlaufende Trag- und Treib- bzw. Ausgleichsmittel 6d aus der Fig. 1 in einer Linie stehen.

In der Fig. 3 ist erkennbar, dass die zu dem Trag- und Treib- bzw. Ausgleichsmittel 3 parallel verlaufenden Trag- und Treib- bzw. Ausgleichsmittel 6a-6d versetzt sind und wie die Öffnungsvorrichtung 7 ausgeformt ist. Die axiale Längsachse 13 ist nicht nur gleichzeitig die Längsachse des Trag- und Treib- bzw. Ausgleichsmittels 3, sondern gleichzeitig auch eine Schnittachse A-A für die in der folgenden Fig. 4 gezeigten Schnittdarstellung.

Diese Schnittdarstellung in der Fig. 4 zeigt über die Fig. 1 hinaus, dass die Klemmbacken 4a-4d jeweils eine Klemmfläche 9a-9d und jeweils eine schräge Fläche 10a-10d aufweisen, wobei die Letzteren jeweils auf einer schräg angeordneten Innenfläche bzw. Gleitfläche 11a-11d der Zackenleiste bzw. von den Gehäusen 1a und 1b gleiten.

Die Feder 5a arbeitet in einer Kraftrichtung 17a, und die Feder 5b in einer annähernd identischen Kraftrichtung 17b. Diese Kraftrichtungen 17a und 17b sind parallel zu der axialen Längsachse 13, die gleichzeitig Längsachse des Trag- und Treib- bzw. Ausgleichsmittels 3 ist. Diese beiden Achsen fallen in der dargestellten aufrechten Stellung der Seilklemme 100 zusammen. Eine beispielhafte Ausführungsform einer erfindungsgemässen Seilklemme 100 ist jedoch nicht nur vertikal, sondern in allen erdenklichen Winkellagen, auch horizontal einsetzbar. Die Kraftrichtungen 17a und 17b der Federn 5a und 5b wirken parallel zu der Längsachse des Trag- und Treib- bzw. Ausgleichsmittels 3, und nicht radial wie bei einer rein federbasierten Seilklemme. Unter Kraftrichtung 17a bzw. 17b wird die Arbeitsrichtung der Federn 5a und 5b verstanden, also sowohl die Richtung der an die Feder 5a bzw. 5b angelegten Kraft (hier: Druckkraft), als auch die Richtung der Auslenkkraft der Federn 5a bzw. 5b.

Die Fig. 5a zeigt schematisch, welche Kräfte auf das Trag- und Treib- bzw. Ausgleichsmittel 3 wirken. Es sind dieses eine Seilzugkraft Fₛ, die entlang der axialen Längsachse 13 wirkt; beidseitig des Trag- und Treib- bzw. Ausgleichsmittels 3; entgegengesetzt und horizontal wirkende Klemmkräfte F_{C11} und F_{C12}, sowie je eine Reibkraft F_{RS1} und F_{RS2}, die an den eingeklemmten Flanken des Trag- und Treib- bzw. Ausgleichsmittels 3 zwischen ihm und den Klemmbacken 4 annähernd vertikal ansetzen.

Die Fig. 5b hingegen zeigt schematisch, welche Kräfte auf die Klemmbacke 4b wirken, die mit einem Keilwinkel W ausgestattet ist. Auf eine Unterseite 15b der Klemmbacke 4b wirkt annähernd die Hälfte einer Federkraft F_{F}. Auf die Klemmfläche 9b wirkt annähernd in einem rechten Winkel 16a eine Klemmkraft F_{Cl}. Wiederum rechtwinklig hierzu zieht eine Reibkraft F_{RS} an der Klemmbacke 4b bzw. an ihrer Klemmfläche 9b aufwärts. An der schrägen Fläche 10b der Klemmbacke 4b setzt eine Normalkraft F_{NK} in einem rechten Winkel 16b an. Wiederum rechtwinklig hierzu, an der schrägen Fläche 10b der Klemmbacke 4b annähernd abwärts, wirkt eine Reibkraft F_{RK} zwischen dieser schrägen Fläche 10b der Klemmbacke 4b und der schräg angeordneten Innenfläche der Zackenleiste bzw. der Gleitfläche, in der die Klemmbacke 4b gebettet ist.

## Patentansprüche

1. Seilklemme (100) für ein Trag- und Treib- bzw. Ausgleichsmittel (3) mit einer axialen Längsachse (13), mit mindestens einer Klemmbacken-Anordnung (14a, 14b) gebildet aus mindestens einer ersten Klemmbacke (4a, 4c) und mindestens einer zweiten Klemmbacke (4b, 4d), wobei eine Klemmkraft (F_{Cl}) zumindest einer Klemmbacke (4a-4d) durch eine Federkraft (F_{F}) mindestens einer Feder (5a, 5b) unterstützt ist, deren Kraftrichtung (17a, 17b) parallel zu der axialen Längsachse (13) ist.

2. Seilklemme (100) nach Anspruch 1, wobei jede Klemmbacke (4a-4d) durch eine Federkraft (F_{F}) mindestens einer Feder (5a, 5b) unterstützt ist.

3. Seilklemme (100) nach einem der Ansprüche 1 oder 2, wobei die erste Klemmbacke (4a, 4c) und die zweite Klemmbacke (4b, 4d) einander gegenüberliegend angeordnet sind.

4. Seilklemme (100) nach einem der Ansprüche 1 oder 2, wobei die mindestens eine Klemmbacken-Anordnung (14a, 14b) mindestens drei im Querschnitt konzentrisch angeordnete Klemmbacken (4a-4d) aufweist.

5. Seilklemme (100) nach einem der vorhergehenden Ansprüche, wobei die Klemmbacken (4a-4d) mittels einer mechanischen Kopplung nur simultan bewegbar sind.

6. Seilklemme (100) nach einem der vorhergehenden Ansprüche, wobei die Klemmbacken (4a-4d) Klemmflächen (9a-9d) aufweisen, die das Trag- und Treib- bzw. Ausgleichsmittel (3) im Querschnitt radial formschlüssig umschliessen.

7. Seilklemme (100) nach einem der vorhergehenden Ansprüche, wobei die Klemmbacken (4a-4d) Klemmflächen (9a-9d) aufweisen, die in ihrer axialen Längsausdehnung konvex ausgeformt sind.

8. Seilklemme (100) nach einem der Ansprüche 1-6, wobei die Klemmbacken (4a-4d) Klemmflächen (9a-9d) aufweisen, die in ihrer axialen Längsausdehnung schlangenlinienförmig ausgeformt sind.

9. Seilklemme (100) nach einem der Ansprüche 1-6, wobei die Klemmbacken (4a-4d) verformbare Keilkissen sind.

10. Seilklemme (100) nach einem der vorhergehenden Ansprüche, wobei die Federkraft (F_{F}) grösser als eine Selbsthemmungskraft der Klemmbacken-Anordnung (14a, 14b) ist.

11. Seilklemme (100) nach einem der vorhergehenden Ansprüche, wobei die Klemmbacken (4a-4d) mittels einer Öffnungsvorrichtung (7) zwischen einer geschlossenen und einer geöffneten Stellung schaltbar sind.

12. Seilklemme (100) nach Anspruch 11, wobei die Öffnungsvorrichtung (7) eine Steuerung aufweist, mit der mindestens zwei Klemmbacken-Anordnungen (14a, 14b) zeitlich verzögert betätigbar sind.

13. Seilklemme (100) nach einem der vorhergehenden Ansprüche, wobei das Schliessen und/oder Öffnen der Klemmbacken (4a-4d) sensorüberwacht ist.

14. Aufzugsanlage mit mindestens einer Seilklemme (100) nach einem der vorhergehenden Ansprüche 1-13.

15. Verfahren zum Befestigen eines Trag- und Treib- bzw. Ausgleichsmittels (3) mittels einer Seilklemme (100) mit mindestens einer Klemmbacken-Anordnung (14a, 14b) gebildet aus mindestens einer ersten Klemmbacke (4a, 4c) und mindestens einer gegenüberliegend angeordneten, zweiten Klemmbacke (4b, 4d), wobei eine Klemmkraft (F_{Cl}) jeder Klemmbacke (4a-4d) durch eine Federkraft (F_{F}) mindestens einer Feder (5a, 5b) unterstützt ist, deren Kraftrichtung (17a, 17b) parallel zu einer axialen Längsachse (13) des Trag- und Treib- bzw. Ausgleichsmittels (3) ist, mit folgenden Schritten:
a) Betätigen einer Öffnungsvorrichtung (7) sodass die mindestens eine Klemmbacken-Anordnung (14a, 14b) geöffnet wird;
b) Einführen des Trag- und Treib- bzw. Ausgleichsmittels (3) in die mindestens eine Klemmbacken-Anordnung (14a, 14b);
c) Betätigen der Öffnungsvorrichtung (7) sodass die mindestens eine Klemmbacken-Anordnung (14a, 14b) geschlossen wird;
d) Anlegen der Klemmbacken (4a-4d) an das Trag- und Treib- bzw. Ausgleichsmittel (3) durch Freigeben der Federkraft (F_{F});
e) Verkeilen der Klemmbacken (4a-4d) zwischen dem Trag- und Treib- bzw. Ausgleichsmittel (3) und einer schräg angeordneten Gleitfläche (11a-11d) eines Gehäuses (1, 1a, 1b) der Seilklemme (100).
